# EUROPEAN PATENT SPECIFICATION

(11) **EP 3 561 338 B1**
(45) Date of publication and mention of the grant of the patent: **07.10.2020**
(21) Application number: 17844602.7
(22) Date of filing: 21.12.2017
(51) Int. Cl.: F16H 55/36, B63B 21/04, B63H 9/10, B66D 3/04, F16H 55/50

(54) **SHEAVE**
SEILSCHEIBE
POULIE À CABLE

(30) Priority: 23.12.2016 ES 201631524 U
(43) Date of publication of application: 30.10.2019
(73) Proprietor: Goldenberg, Nicolás Alejandro, 46013 Valencia (ES)
(72) Inventor: Goldenberg, Nicolás Alejandro, 46013 Valencia (ES)
(74) Representative: Sahuquillo Huerta, Jesús
(86) International application number: PCT/ES2017/070841
(87) International publication number: WO 2018/115564

(56) References cited:
- WO-A1-2018/015605
- AU-A1- 2004 202 511
- NL-C- 1 036 380

## Description

The present invention relates to the field of pulleys designed for the deflection of ropes with low weight and high load capabilities. Its main characteristic is the use of a low friction plain bearing which is allocated between the lashing rope and the pulley sheave.

### BACKGROUND OF THE INVENTION

Nowadays a wide variety of pulleys types and means of multiplying force and/or elements for deflecting ropes are available. One example of this are the loop thimbles or low friction rings which are essentially a ring with an outer grove and an interior recess. The rings are fixed through the exterior using a rope fixed around the outer grove. Its central recess, which geometry has been designed to reduce friction, is used to deflect the rope. This type of pulley does not allow the ring to rotate and only employs its central recess surface to allow the rope to slide through.

The main advantages of such systems are: high working loads, reduced weight, durability and maintenance free. Its main disadvantage is that by not having rotating parts the deflected rope generates friction; as a result, wear appears. Because of this these systems are generally employed in semi static loads.

A different example are pulleys with bearings (balls, rollers o plain bearings), this type of pulleys contains sheaves with bearings which are composed by two concentric cylinders with a bearing between them. The outer cylinder features a groove for guiding and deflecting the rope and the inner cylinder provides, through its outer side, a mean to allocate the bearings (race) and through its central recess a mean to fix the sheave to the pulleys body; generating in this way a close structure and means for fixing.

This type of pulley provides very low friction but a lower load capacity; its manufacturing is costly due to the considerable number of components. These systems present a lower working life as they are dependent on the bearings for a low friction and its body as a main structure.

Lastly, pulleys as described in document WO2015001028 are known. This type allows the deflection of a rope through a sheave's annular groove. The sheave has no bearing and rotates in direct contact with a rope.

These pulleys provide a high working load and low weight, but its fixing rope is acting as the sheave rotation axes and main structure. As the fixing rope is in direct contact with the sheave, which spins at high loads, not only generates friction but is subject to wear; compromising the structure integrity of the pulley. Moreover, the fixing rope employed must provide the lowest possible friction; which reduces the material choice and increases costs.

NL1036380C discloses a pulley falling, in the opinion of the Examining Division of the European Patent Office, within the wording of the pre-characterizing portion of claim 1.

AU 2004 202 511 A1 discloses, in the opinion of the Examining Division of the European Patent Office, a pulley comprising a sheave which has a central recess and a groove; and at least one fixing rope which is arranged to transfer the loads from the sheave to a fixing point, transversally passing through the central recess to the sheave.

### DESCRIPTON OF THE INVENTION

This invention relates to the creation of a pulley with a low weight, high working load, high efficiency and increased safety and is defined in claim 1. The dependent claims concern particular embodiments of the invention as defined in claim 1.

Relying on its design, this pulley, delivers high performance at a low cost; as a result, it provides a low budget and highly effective solution. In addition, and compared to existing solutions, it provides an increased safety factor.

By utilizing less components and so the pulley's structure, in relation with other existing pulleys, the current invention delivers a modern and highly safe solution. By incorporating easy to replace sacrificial parts (plain bearing) this invention extends pulleys work life. As a result, its maintenance cost is reduced, as there is no need to replace the full pulley which increases the cost effectiveness of the invention.

In this way the user can extend the pulleys life without compromising the workload or the level of safety needed for said pieces.

Moreover, if the sacrificial part fails the structural integrity of the pulley is protected as the connection among the working parts is not lost. As a result, the user can replace the part with no, or minimum, collateral damage.

Within this description and claims, the word "comprising", and variants do not exclude other technical characteristics, additives, components or steps. For experts in the matter, other objects, advantages and invention characteristics will follow partially from the description and partially from the practice. The examples and drawings attached mean to illustrate and by no means restrain this invention. Moreover, this invention covers all the possible combinations of the preferred and particular embodiments herein disclosed.

### BRIEF DESCRIPTION OF THE DRAWINGS

Particular embodiments of the invention and advantages of the invention will be appreciated considering the following description, given based on the attached drawings. Those examples are given in a non-limiting manner. The description should be read with reference to the appended drawings in which:

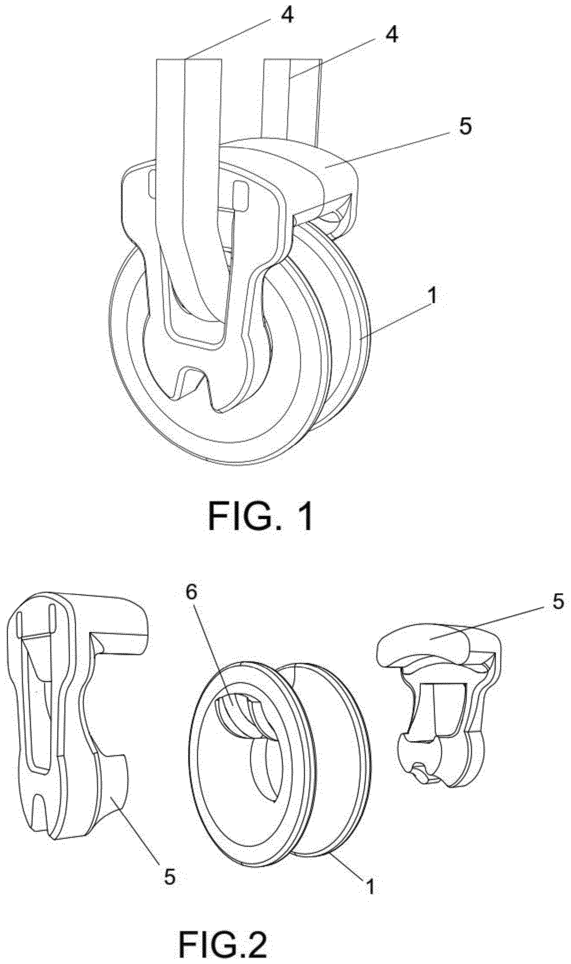

- FIG1.: Illustrates first embodiment of the pulley according to the present invention.
- FIG2.: Illustrates an exploded view of the components of the previous figure.

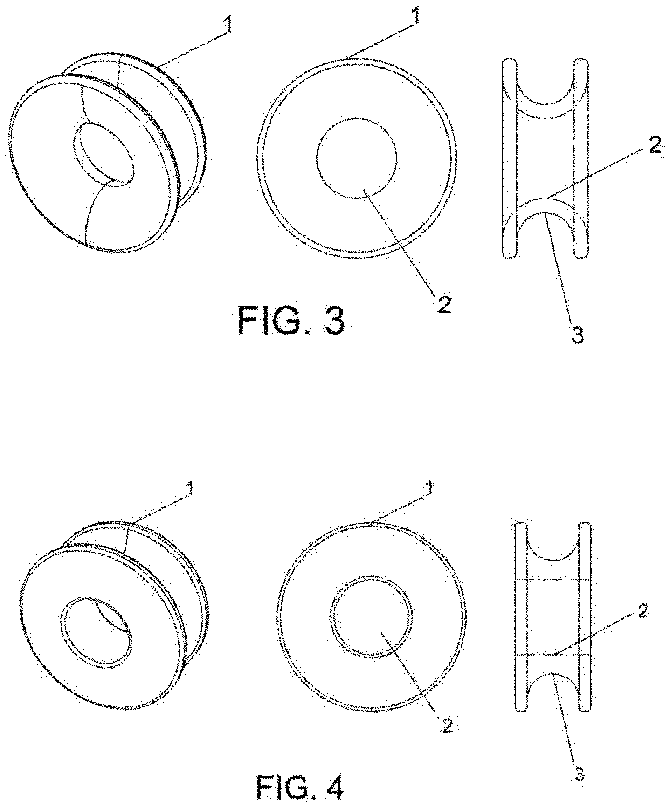

- FIG3.: Illustrates a sheave (1) as a component of the present invention.
- FIG4.: Illustrates an alternative sheave (1) geometry.
- FIG5.: Illustrates a cross section view of the pulley according to the present invention; more precisely, a pulley with body (5).
- FIG6.: Illustrates an embodiment such as in the previous figure but with a different sheave geometry (1).
- FIG7.: Illustrates a third embodiment of the pulley according to the present invention.
- FIG8.: Illustrates an embodiment such as in the previous figure but with a different sheave geometry (1).
- FIG9.: Illustrates a fourth embodiment of the pulley without body.
- FIG10.: Illustrates an embodiment such as in the previous figure but with a different sheave geometry (1).
- FIG11.: Illustrates a fifth embodiment of the pulley.
- FIG12.: Illustrates an embodiment such as in the previous figure but with a different sheave geometry (1).

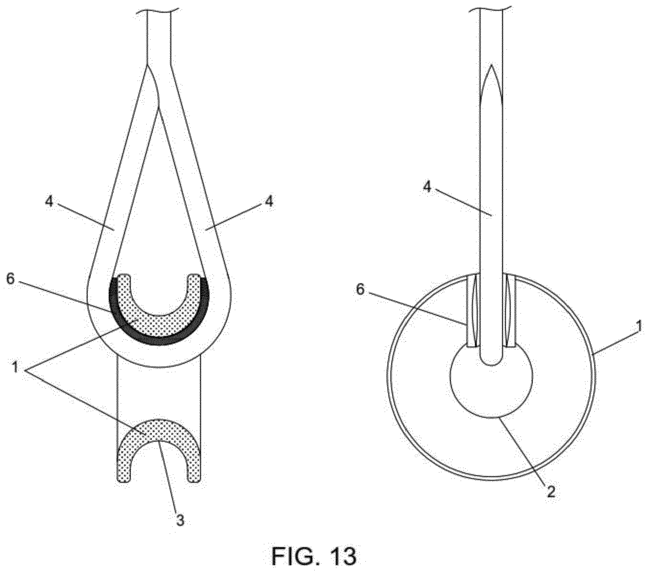

- FIG13.: Illustrates a sixth embodiment of the pulley, with a spliced fixing rope (4).

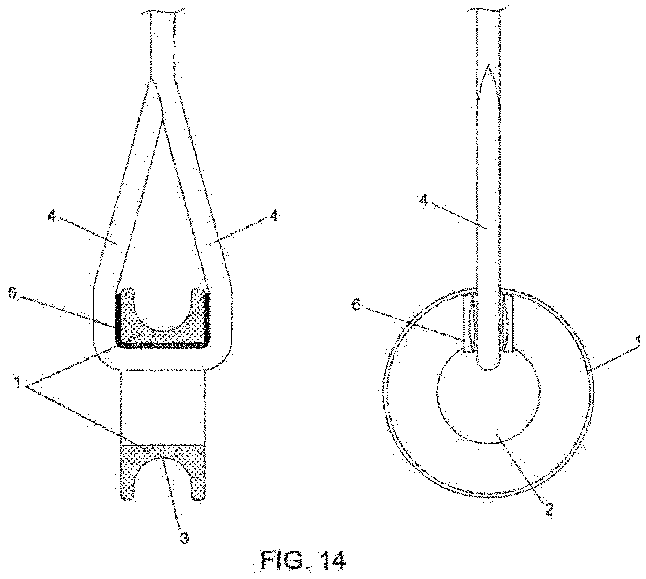

- FIG14.: Illustrates an embodiment such as in the previous figure but with a different sheave geometry (1).
- FIG15.: Illustrates a seventh embodiment of the pulley, with a spliced fixing rope (4) and a body (5).
- FIG16.: Illustrates an embodiment such as in the previous figure but with a different sheave geometry (1).
- FIG17.: Illustrates an eighth embodiment of the pulley, with two bearings (6) and a body (5).
- FIG18.: Illustrates an embodiment of the pulley, with the addition of a second bearing (6) to support a second fixing rope (4).
- FIG19.: Illustrates a ninth embodiment of the pulley, with a specific design for fixed installations.
- FIG20.: Illustrates an embodiment such as in the previous figure, but with two bearings (6) and two fixing ropes (4).

### PREFERRED EMBODIMENT OF THE INVENTION

The attached figures illustrate several embodiments for the application of this invention. More precisely, the pulley in this invention is characterized by comprising a sheave (1) which incorporates a central recess (2) and an outer groove (3) in order to deflect a rope; at least one fixing rope (4) which is in direct contact with a plain bearing (6) and, optionally, may be fitted with a body (5).

The fixing rope (4) is located transversally to the sheave (1) throw its central recess (2) and it is configured to transfer the loads applied on the sheave (1) to a fixing point.

The plain bearing (6) is located between the fixing rope (4) and the sheave (1). The bearing (6) reduces friction between the fixing rope (4) and the sheave (1) by creating a low friction media which prevents the rope to be in direct contact with the fixing rope (4) and the sheave (1).

When loaded, the bearing (6) is in compression between the fixing rope (4) and the sheave (1).

In a practical implementation, the bearing (6) is in direct contact with the fixing rope (4) and with the sheave (1) through its central recess (2).

Ideally the plain bearing (6) will be manufactured in a material with a low friction coefficient which will allow the sheave (1) to rotate; additionally, the bearing (6), will act as a sacrificial piece as it is not vital for the structural integrity of the system.

The body (5) doesn't contribute to the pulleys primary structure, its only use is to protect and guide the components.

The fixing rope (4) does not require of any specific requirements for the pulley to work, which adds versatility to the system; allowing to use any rope type chosen accordingly to the load applied.

The body (5) and the sheave (1) can be manufactured in various materials, such as, metal, plastic, polymers, wood or any material with equivalent mechanical properties.

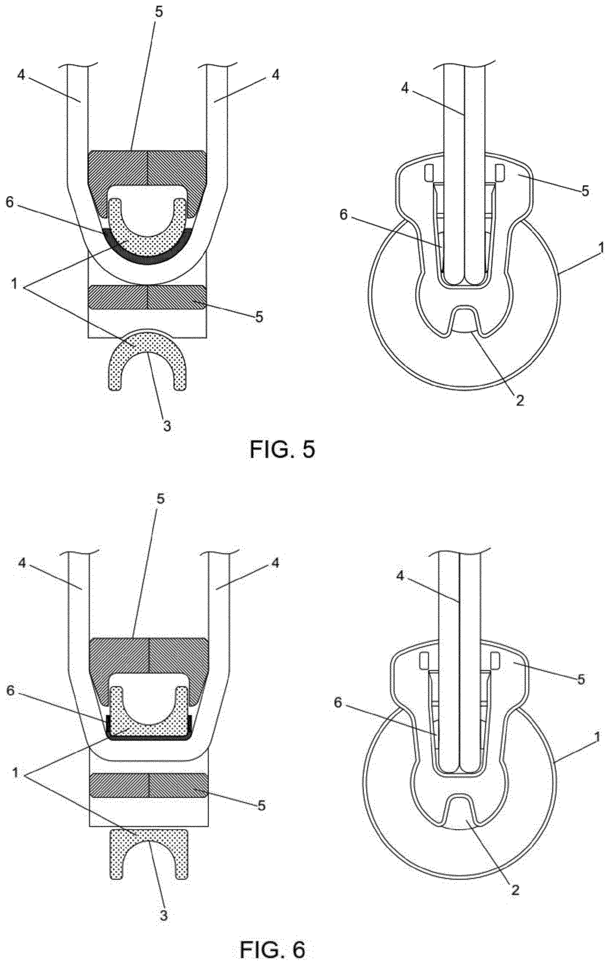

Figures 5 and 6 display a cross section detail of the invention with two different sheave (1) geometries. In the figures it can be clearly seen how the fixing rope (4) is placed transversally to the body (5) and to the sheave (1) by going through the central recess (2) and where the bearing (4) is contained by the fixing rope (4) and the sheave (1); while the body (5) acts as a guide for the fixing rope (4) and protects the other components.

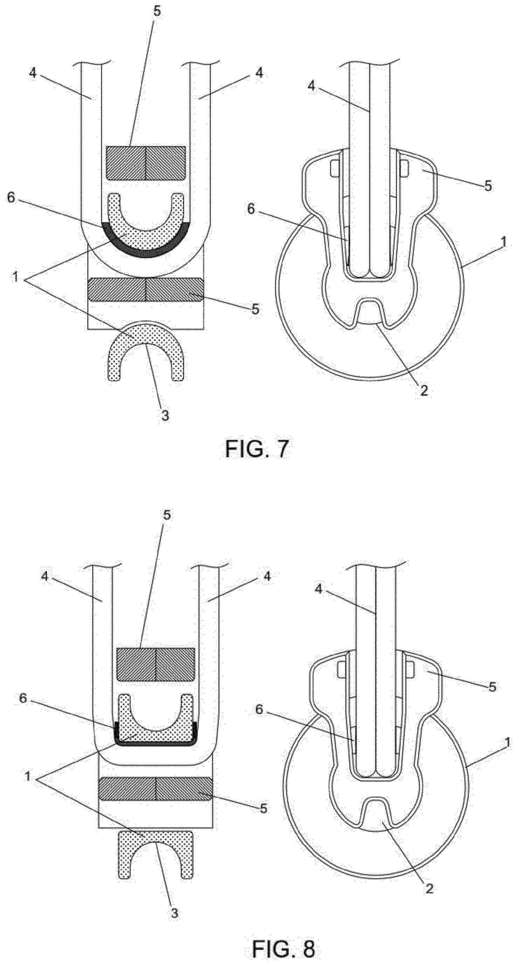

In figures 7 and 8 it can be seen how the body (5) allocates the rope within the body allowing for a more compact version and more protection to the fixing rope (4).

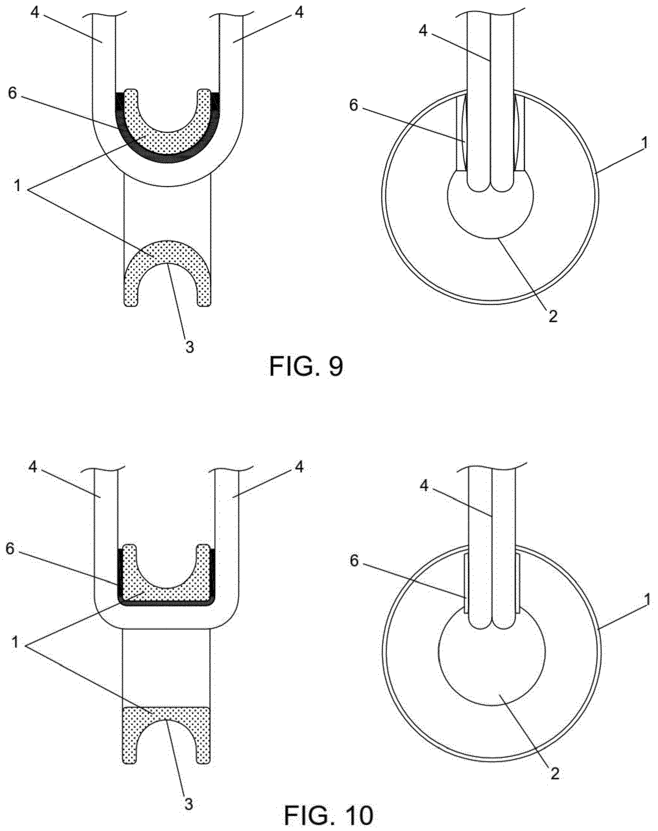

Figures 9 and 10 display a pulley with no body (5) which provides a simplified structure without diminishing its main operating characteristics, life span and stability.

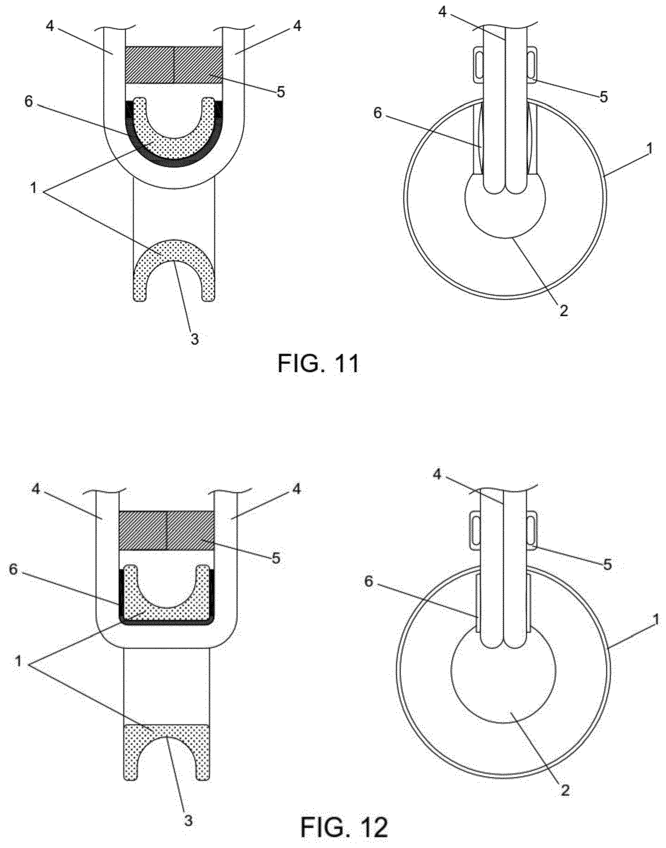

Figures 11 y 12 show an example of a pulley with a smaller body (5) than shown previously; the only purpose of such body (5) is to guide the fixing rope (4).

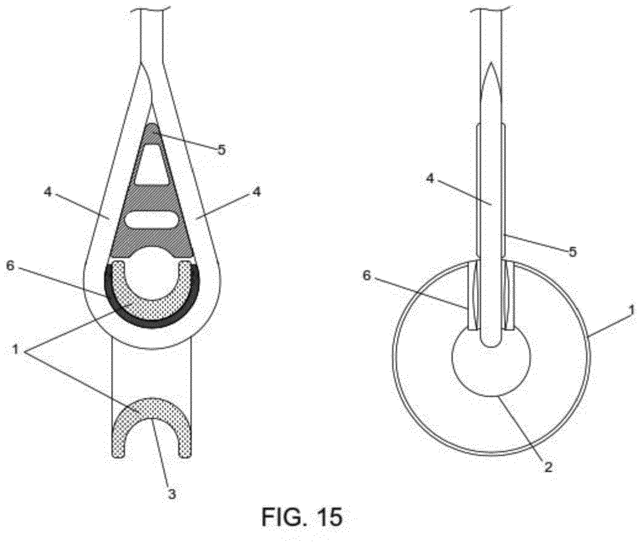

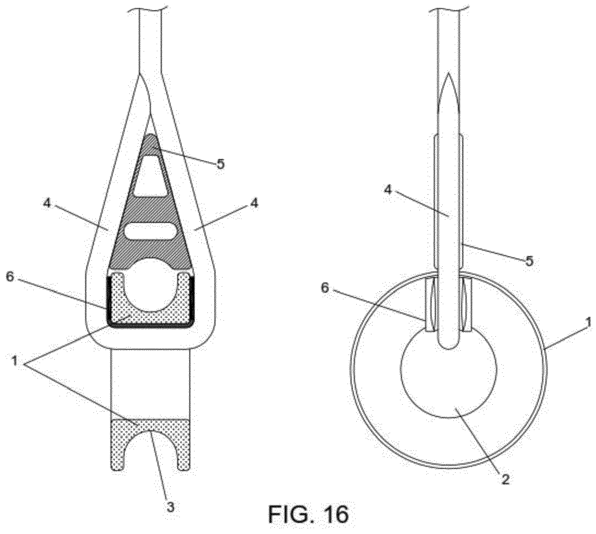

On figures 15 and 16 a specific designed body (5) for spliced ropes is shown.

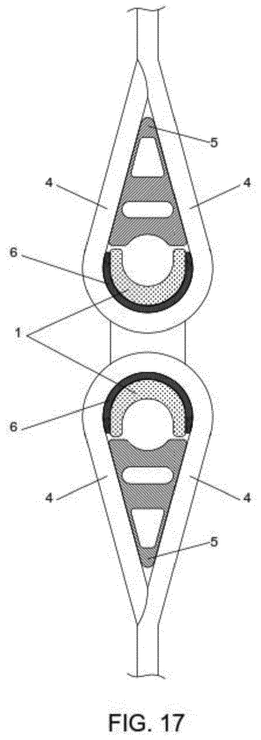

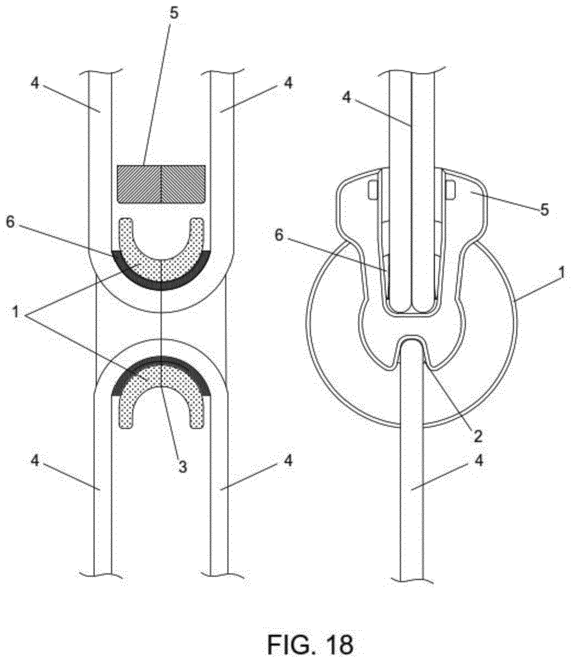

Figures 17 and 18 display a pulley with multiple bearings (6), more precisely, figure 17 shows a pulley with multiple bearings (6) for spliced fixing ropes (4) while figure 18, displays the use of a secondary fixing rope (4) using a second bearing (4).

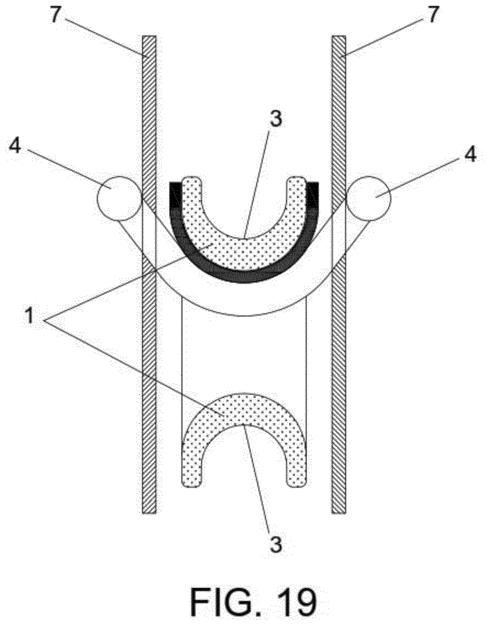

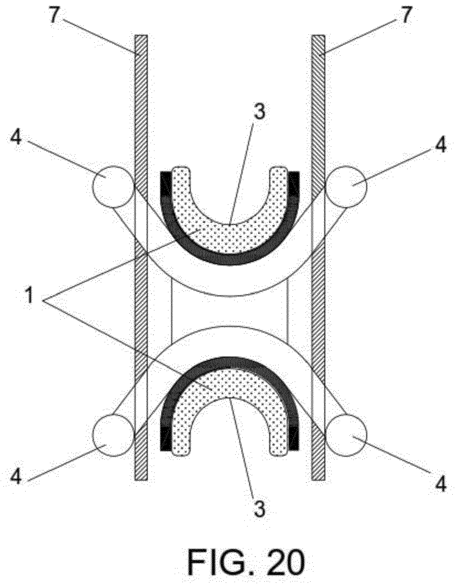

Lastly, figures 19 and 20 display a pulley configured to be fixed to other components.

More precisely, figure 19 shows how the fixing rope (4) is fixed to a structure (7) to carry and transfer the loads.

While figure 20, displays a second version of the above but incorporating the use of a second bearing (6) to be used when the pulley requires a more stable configuration.

## Claims

1. A pulley comprising a sheave (1) without bearings which has a central recess (2) and a groove (3); and at least one fixing rope (4) which is arranged to transfer the loads from the sheave (1) to a fixing point, transversally passing through the central recess (2) of the sheave (1); and further comprising, at least, one plain bearing (6) which is allocated between the fixing rope (4) and the sheave (1) and **characterized in that** the plain bearing (6) surface is in direct contact with the fixing rope (4) on one side and with the sheave (1) through its central recess (2) on the other side; and wherein, when loaded, the plain bearing (6) is in compression between the fixing rope (4) and the sheave (1).

2. The pulley according to claim 1 which incorporates a body (5) to guide and protect the rest of the components of the pulley.

3. The pulley as claimed on either of the claims 1-2 in that it incorporates one or more fixing rope (4) that have been spliced.

4. The pulley as claimed on either of the claims 1-3 in that the fixing rope (4) has been secured or fixed to a structure (7) arranged to transmit the loads.

5. The pulley as claimed on either of the claims 1-4 in that the plain bearing (6) is made of a low friction material allowing the sheave (1) to rotate.

6. The pulley as claimed on either of the preceding claims wherein the sheave (1) and the body (5) are made of metal, plastic, polymer, wood or resin.

## Patentansprüche

1. Riemenscheibe mit einer Scheibe (1) ohne Lager, die eine zentrale Aussparung (2) und eine Nut (3) aufweist; und mindestens ein Befestigungsseil (4), das angeordnet ist, um die Lasten von der Scheibe (1) auf einen Befestigungspunkt zu übertragen, der quer durch die zentrale Aussparung (2) der Scheibe (1) verläuft; und ferner umfassend mindestens ein Gleitlager (6), das zwischen dem Befestigungsseil (4) und der Scheibe (1) angeordnet ist und **dadurch gekennzeichnet ist, dass** die Oberfläche des Gleitlagers (6) in direktem Kontakt mit dem Befestigungsseil (4) steht) auf einer Seite und mit der Scheibe (1) durch ihre zentrale Aussparung (2) auf der anderen Seite; und wobei bei Belastung das Gleitlager (6) zwischen dem Befestigungsseil (4) und der Scheibe (1) unter Druck steht.

2. Riemenscheibe nach Anspruch 1, die einen Körper (5) enthält, um den Rest der Komponenten der Riemenscheibe zu führen und zu schützen.

3. Die Riemenscheibe, wie in einem der Ansprüche 1-2 angegeben, besteht darin, dass sie ein oder mehrere Befestigungsseile (4) enthält, die gespleißt wurden.

4. Riemenscheibe nach einem der Ansprüche 1 bis 3, indem das Befestigungsseil (4) an einer Struktur (7) befestigt oder befestigt wurde, die zur Übertragung der Lasten angeordnet ist.

5. Riemenscheibe nach einem der Ansprüche 1 bis 4, da das Gleitlager (6) aus einem reibungsarmen Material besteht, das es der Scheibe (1) ermöglicht, sich zu drehen.

6. Riemenscheibe nach einem der vorhergehenden Ansprüche, wobei die Scheibe (1) und der Körper (5) aus Metall, Kunststoff, Polymer, Holz oder Harz bestehen.

## Revendications

1. Poulie comprenant une poulie (1) sans paliers qui présente un évidement central (2) et une gorge (3); et au moins un câble de fixation (4) qui est agencé pour transférer les charges de la poulie (1) à un point de fixation, passant transversalement à travers l'évidement central (2) de la poulie (1); et comprenant en outre, au moins, un palier lisse (6) qui est réparti entre le câble de fixation (4) et la poulie (1) et **caractérisé en ce que** la surface d'appui lisse (6) est en contact direct avec le câble de fixation (4)) d'un côté et avec la poulie (1) à travers son évidement central (2) de l'autre côté; et dans lequel, lorsqu'il est chargé, le palier lisse (6) est en compression entre le câble de fixation (4) et la poulie (1).

2. Poulie selon la revendication 1 qui incorpore un corps (5) pour guider et protéger le reste des composants de la poulie.

3. . Poulie selon l'une quelconque des revendications 1 à 2 en ce qu'elle comprend une ou plusieurs cordes de fixation (4) qui ont été épissées.

4. . Poulie selon l'une quelconque des revendications 1 à 3 en ce que la corde de fixation (4) a été fixée ou fixée à une structure (7) agencée pour transmettre les charges.

5. . Poulie selon l'une quelconque des revendications 1 à 4 en ce que le palier lisse (6) est réalisé en un matériau à faible frottement permettant à la poulie (1) de tourner.

6. . Poulie selon l'une quelconque des revendications précédentes, dans laquelle la poulie (1) et le corps (5) sont en métal, plastique, polymère, bois ou résine.
